# EUROPÄISCHE PATENTSCHRIFT

(11) **EP 3 053 717 B1**
(45) Veröffentlichungstag und Bekanntmachung des Hinweises auf die Patenterteilung: **10.06.2020**
(21) Anmeldenummer: 15000308.5
(22) Anmeldetag: 03.02.2015
(51) Int. Cl.: B27B 17/00, B25F 5/02

(54) **Arbeitsgerät**
Work device
Appareil de travail

(43) Veröffentlichungstag der Anmeldung: 10.08.2016
(73) Patentinhaber: Andreas Stihl AG & Co. KG, 71336 Waiblingen (DE)
(72) Erfinder: Wolf, Günter, 71570 Oppenweiler (DE); Hollmeier, Friedrich, 73635 Rudersberg (DE); Bläsi, Jörg, 73061 Ebersbach (DE); Techow, Thomas, 73249 Wernau (DE)
(74) Vertreter: Reinhardt, Annette

(56) Entgegenhaltungen:
- EP-A1- 0 822 036
- EP-A1- 1 602 454
- WO-A1-2004/078434
- DE-A1-102006 037 329
- GB-A- 2 462 938
- US-A- 5 565 719
- US-A1- 2011 232 110

## Beschreibung

Die Erfindung betrifft ein handgeführtes Arbeitsgerät der im Oberbegriff des Anspruchs 1 angegebenen Gattung.

Aus der DE 10 2006 037 329 A1 ist ein handgeführtes Arbeitsgerät, nämlich eine handgeführte Kettensäge bekannt, deren Kettenraddeckel über unverlierbar gehaltene Muttern am Gehäuse fixiert ist. Die Oberfläche des Kettenraddeckels ist im Bereich der Muttern eben ausgebildet, und die Muttern sind als Bundmuttern ausgeführt. Dadurch ergibt sich eine große Auflagefläche der Mutter am Kettenraddeckel. Die Außenseite der Bundmutter ist aufgrund der Höhe der Schlüsselflächen und des Bunds vergleichsweise weit von der Auflagefläche der Mutter am Kettenraddeckel beabstandet, und es ergibt sich eine große Baubreite der Mutter.

Aus der US 2011/0232110 A1 ist ein Arbeitsgerät gemäß dem Oberbegriff des Anspruchs 1 bekannt, deren Kettenraddeckeln über Bundmuttern im Gehäuse fixiert sind. Die Bundmuttern liegen auf Domen des Kettenraddeckels auf. Der Bund zwischen dem Abschnitt der Muttern, die die Schlüsselflächen aufweisen, und dem Dom, ragt seitlich, also zur Längsmittelachse der Befestigungsbolzen radial über den Dom.

Der Erfindung liegt die Aufgabe zugrunde, ein handgeführtes Arbeitsgerät der gattungsgemäßen Art zu schaffen, bei dem ein sicheres Festdrehen und Lösen der Befestigungselemente auch bei geringer Erstreckung der Schlüsselflächen des Befestigungselements möglich ist.

Diese Aufgabe wird durch ein handgeführtes Arbeitsgerät mit den Merkmalen des Anspruchs 1 gelöst.

Es ist vorgesehen, dass der Gehäusedeckel einen an der Gehäusedeckelaußenseite nach außen ragenden Dom besitzt, der eine Auflagefläche für das Befestigungselement bildet und durch den sich die Öffnung erstreckt. Der maximale radiale Abstand des Außenumfangs des Doms zur Längsmittelachse eines Stehbolzens des Arbeitsgeräts ist dabei an der Auflagefläche und in einem an die Auflagefläche angrenzenden ersten Bereich höchstens so groß wie die halbe Schlüsselweite der Schlüsselflächen des Befestigungselements. Dadurch kann ein Werkzeug zum Festdrehen und Lösen des Befestigungselements über den ersten Bereich des Doms geschoben werden. Dadurch ist ein Abrutschen des Werkzeugs von den Schlüsselflächen des Befestigungselements auch dann vermieden, wenn die Schlüsselflächen in Richtung der Längsmittelachse des Stehbolzens vergleichsweise kurz ausgebildet sind. Bei vergleichsweise niedriger Ausbildung der Schlüsselflächen kann die Erstreckung des Arbeitsgeräts in Richtung der Längsmittelachse des Stehbolzens, bei einer Motorsäge insbesondere die Baubreite der Motorsäge, verringert werden. Ist das Arbeitsgerät eine Motorsäge, so kann der seitliche Abstand zwischen der Sägekette und der Gehäusedeckelaußenseite bzw. der Außenseite der Befestigungselemente verringert werden, so dass mit der Motorsäge näher an einem Hindernis geschnitten werden kann. Der Begriff "radial" bezeichnet dabei die radiale Richtung zur Längsmittelachse des Stehbolzens.

Der an der Gehäusedeckelaußenseite angeordnete Abschnitt des Befestigungselements ist in einer Draufsicht in Richtung der Längsmittelachse des Stehbolzens von einer Umfangskontur begrenzt, die die Schlüsselflächen besitzt, und der Dom liegt zumindest an der Auflagefläche und in dem an die Auflagefläche angrenzenden ersten Bereich in einer Draufsicht in Richtung der Längsmittelachse des Stehbolzens innerhalb der von der Umfangskontur umschlossenen Fläche. Dadurch kann ein Werkzeug, das an den Schlüsselflächen angreift, über den ersten Bereich des Doms geschoben werden. Dadurch ist ein Abrutschen des Werkzeugs von den Schlüsselflächen auch bei geringer Höhe der Schlüsselflächen vermieden. Die Höhe der Schlüsselflächen ist dabei parallel zur Längsmittelachse des Stehbolzens gemessen. Vorteilhaft sind die Schlüsselflächen an einem Außensechskant des Befestigungselements ausgebildet. Der an der Gehäusedeckelaußenseite angeordnete Abschnitt des Befestigungselements ist in einer Draufsicht in Richtung der Längsmittelachse des Stehbolzens von dem Außensechskant begrenzt, und der Dom liegt zumindest an der Auflagefläche und in dem an die Auflagefläche angrenzenden ersten Bereich in der Draufsicht in Richtung der Längsmittelachse des Stehbolzens innerhalb des Außensechskants.

Vorteilhaft beträgt die Höhe des an die Auflagefläche angrenzenden Bereichs des Doms mindestens 2 mm. Die Höhe des an die Auflagefläche angrenzenden Bereichs des Doms beträgt vorteilhaft mindestens 3 mm, vorzugsweise mindestens 4 mm. Dadurch kann das Werkzeug 2 mm, insbesondere 3 mm, vorzugsweise mindestens 4 mm über den Dom geschoben werden. Ein Abrutschen des Werkzeugs von den Schlüsselflächen ist dadurch sicher vermieden. Die Schlüsselflächen können dadurch vergleichsweise niedrig ausgebildet werden. Die parallel zur Längsmittelachse des Stehbolzens gemessene Höhe der Schlüsselflächen beträgt vorteilhaft weniger als 10 mm, insbesondere weniger als 8 mm. Bevorzugt beträgt die parallel zur Längsmittelachse des Stehbolzens gemessene Höhe der Schlüsselflächen 4 mm bis 6 mm. Dadurch kann eine sehr geringe Baubreite des Gehäusedeckels und des daran angeordneten Befestigungselements erreicht werden.

Der Gehäusedeckel ist insbesondere aus Metall, und die am Dom ausgebildete Auflagefläche ist spanend bearbeitet. Dadurch können ausreichend hohe Anpresskräfte zwischen dem Befestigungselement und der Auflagefläche erreicht werden, auch wenn die Kontaktfläche aufgrund des verringerten maximalen Abstandes des Außenumfangs des Doms zur Längsmitteachse des Stehbolzens verringert ist. Der Gehäusedeckel besitzt vorteilhaft eine Außenschicht auf dem Metall. Die Außenschicht kann beispielsweise eine Lackierung oder eine Beschichtung oder dergleichen sein. Vorteilhaft erstreckt sich die Außenschicht nicht auf die Auflagefläche. Bevorzugt ist die Auflagefläche nach dem Aufbringen der Außenschicht spanend bearbeitet, so dass sich eine definierte, ebene Auflagefläche ergibt. Die Schlüsselflächen grenzen vorteilhaft an eine Stirnseite des Befestigungselements an, die an der Auflagefläche anliegt. Die Schlüsselflächen erstrecken sich demnach bis an die Auflagefläche, so dass sich eine möglichst große axiale Erstreckung der Schlüsselflächen ergibt.

Vorteilhaft ist das Befestigungselement in der Öffnung des Gehäusedeckels unverlierbar gehalten. Auch bei vollständig von dem Stehbolzen abgeschraubtem Befestigungselement lässt sich das Befestigungselement dadurch nicht von dem Gehäusedeckel abnehmen, sondern ist am Gehäusedeckel gehalten. Vorteilhaft besitzt das Befestigungselement einen in die Öffnung ragenden Halterand, der einen Rand der Öffnung hintergreift. Der Halterand hält das Befestigungselement auch dann am Gehäusedeckel, wenn das Befestigungselement vollständig von dem Stehbolzen abgeschraubt ist. Der Rand der Öffnung ist vorteilhaft in dem Dom ausgebildet. Aufgrund der Verliersicherung des Befestigungselements an dem Gehäusedeckel über einen Halterand, der einen Rand des Gehäusedeckels hintergreift, wird eine vergleichsweise große Baubreite des Gehäusedeckels in diesem Bereich benötigt, um die axiale Relativbewegung des Befestigungselements gegenüber dem Gehäusedeckel beim Befestigen und Lösen des Befestigungselements zu ermöglichen. Gleichzeitig wird eine ausreichend große Aufschublänge für ein Werkzeug zum Verdrehen des Befestigungselements benötigt. Aufgrund des ersten Bereichs des Doms, über den ein Werkzeug zum Lösen oder Festziehen des Befestigungselements geschoben werden kann, kann die Baubreite des Gehäusedeckels reduziert werden, da die in axialer Richtung gemessene Höhe des ersten Bereichs sowohl als axiale Länge für die Verliersicherung des Befestigungselements als auch als Aufschublänge für ein Werkzeug genutzt wird. Die axiale Länge ist dabei die in Richtung der Längsmittelachse des Stehbolzens gemessene Länge.

Bevorzugt ist der Rand der Öffnung in einem zweiten Bereich des Doms angeordnet, dessen Außendurchmesser größer als die Schlüsselweite der Schlüsselflächen ist. Dadurch kann ein ausreichend großer Außendurchmesser für den Rand erreicht werden. Um die Baubreite des Gehäusedeckels zu verringern, kann jedoch auch vorgesehen sein, dass der Rand der Öffnung in dem an die Auflagefläche angrenzenden ersten Bereich des Doms angeordnet ist. Der Halterand ist vorteilhaft an einem in die Öffnung ragenden hülsenförmigen Abschnitt des Befestigungselements ausgebildet. Um ein einfaches Abnehmen des Gehäusedeckels zu erreichen, sind der Abstand zwischen dem Halterand und dem Rand bei geklemmt gehaltener Werkzeugeinheit, die Gewindelänge des Befestigungselements und die Gewindelänge des Stehbolzens vorteilhaft so aufeinander abgestimmt, dass das Befestigungselement bei zwischen Gehäuse und Gehäusedeckel geklemmt gehaltener Werkzeugeinheit vollständig vom Gewinde des Stehbolzens abgeschraubt werden kann. Zum vollständigen Lösen des Befestigungselements muss der Gehäusedeckel dadurch seine Position nicht ändern. Insbesondere bei einer Befestigung des Gehäusedeckels über zwei Befestigungselemente kann dadurch ein Befestigungselement vollständig gelöst werden, bevor das zweite Befestigungselement gelöst wird. Dadurch ergibt sich eine einfache Handhabung.

Bevorzugt ist der Gehäusedeckel ein Kettenraddeckel, und die Werkzeugeinheit umfasst eine zwischen dem Kettenraddeckel und dem Gehäuse geklemmt gehaltene Führungsschiene. Die Werkzeugeinheit kann jedoch auch ein anderes Werkzeug, insbesondere eine Schleifscheibe umfassen.

Ein Ausführungsbeispiel der Erfindung wird im Folgenden anhand der Zeichnung erläutert. Es zeigen:
- Fig. 1: eine perspektivische Darstellung einer Motorsäge,
- Fig. 2: eine perspektivische Darstellung eines Gehäusedeckels der Motorsäge aus Fig. 1 mit daran angeordneten Befestigungselementen,
- Fig. 3: eine Explosionsdarstellung von Gehäusedeckel und Befestigungselementen,
- Fig. 4: eine ausschnittsweise Seitenansicht der Motorsäge,
- Fig. 5: einen Schnitt entlang der Linie V-V in Fig. 4,
- Fig. 6: eine vergrößerte Darstellung des Bereichs VI aus Fig. 5,
- Fig. 7: eine vergrößerte Draufsicht auf die Befestigungselemente am Gehäusedeckel,
- Fig. 8: eine vergrößerte Schnittdarstellung durch einen Dom des Gehäusedeckels,
- Fig. 9: eine Schnittdarstellung entsprechend Fig. 6 mit an einem Befestigungselement angeordnetem Werkzeug,
- Fig.: 10 den Ausschnitt X aus Fig. 9 in vergrößerter Darstellung,
- Fig. 11: einen Schnitt durch den Gehäusedeckel mit daran angeordneten Befestigungselementen,
- Fig. 12: eine ausschnittsweise Schnittdarstellung eines Ausführungsbeispiels eines Gehäusedeckels.

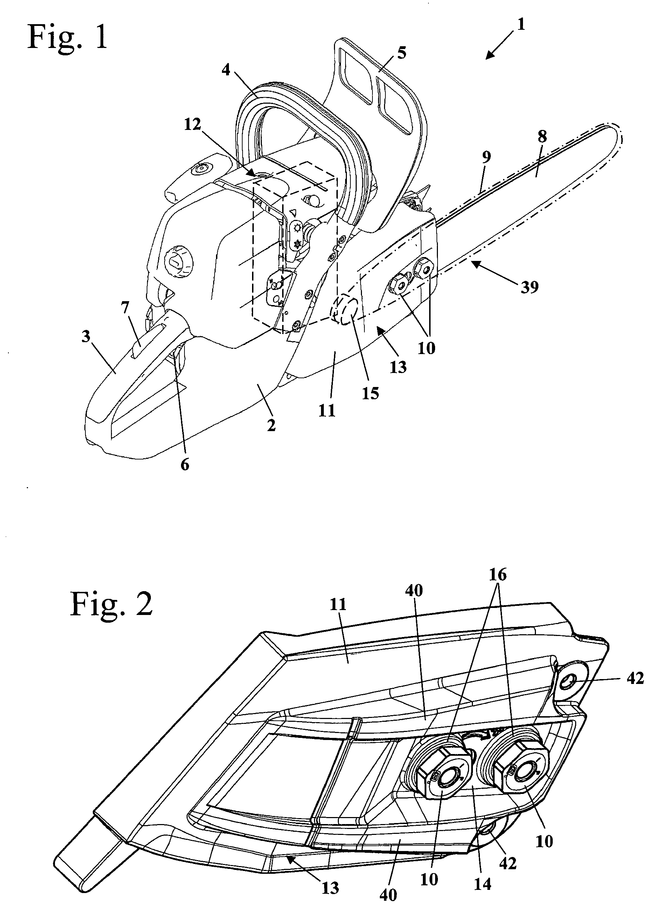

Fig. 1 zeigt als Ausführungsbeispiel für ein Arbeitsgerät eine handgeführte Motorsäge 1. Die Motorsäge 1 besitzt ein Gehäuse 2, an dem ein hinterer Handgriff 3 sowie ein Griffbügel 4 zum Führen der Motorsäge 1 im Betrieb festgelegt sind. Am hinteren Handgriff 3 sind ein Bedienhebel 6 sowie eine Bedienhebelsperre 7 schwenkbar gelagert. Am Gehäuse 2 ist eine Werkzeugeinheit 39 festgelegt, die eine Führungsschiene 8 und eine an der Führungsschiene 8 umlaufend angeordnete Sägekette 9 umfasst. Auch eine anders aufgebaute Werkzeugeinheit 39 kann vorgesehen sein. Am Gehäuse 2 ist ein Handschutzbügel 5 angeordnet, der im Ausführungsbeispiel schwenkbar am Gehäuse 2 gelagert ist und zum Auslösen einer nicht gezeigten Kettenbremsvorrichtung dient.

Im Gehäuse 2 ist ein Antriebsmotor 12 angeordnet, der vorteilhaft als Verbrennungsmotor ausgebildet ist. Der Antriebsmotor 12 kann jedoch auch ein über Kabel oder einen Akku angetriebener Elektromotor sein. Das Gehäuse 2 ist das Motorgehäuse der Motorsäge 1. Der Antriebsmotor 12 treibt ein Kettenrad 15 rotierend an, das seinerseits die Sägekette 9 antreibt. Das Kettenrad 15 ist von einem Gehäusedeckel 11 abgedeckt. Der Gehäusedeckel 11 ist ein Kettenraddeckel. Der Gehäusedeckel 11 besitzt eine dem Gehäuse 2 abgewandte Gehäusedeckelaußenseite 13, an der zwei Muttern 10 zur Befestigung des Gehäusedeckels 11 am Gehäuse 2 angeordnet sind. Die Führungsschiene 8 ist zwischen dem Gehäusedeckel 11 und dem Gehäuse 2 geklemmt gehalten.

Wie Fig. 2 zeigt, besitzt der Gehäusedeckel 11 an seiner Gehäusedeckelaußenseite 13 zwei Längsstege 40, die eine Auflagefläche für den Gehäusedeckel 11 an einem Werkstück, beispielsweise einem zu fällenden Baum bilden. Zwischen den beiden Längsstegen 40 ist eine Vertiefung 14 an der Gehäusedeckelaußenseite 13 gebildet, in der die Muttern 10 angeordnet sind. Wie Fig. 2 zeigt, besitzt der Gehäusedeckel 11 an der Gehäuseaußenseite 13 nach außen ragende Dome 16, an denen die Muttern 10 aufliegen. Die Dome 16 sind dabei in der Vertiefung 14 angeordnet. Die Muttern 10 sind vorteilhaft weitgehend, insbesondere vollständig in der Vertiefung 14 angeordnet. Dadurch kann der Gehäusedeckel 11 an den Längsstegen 40 an einem Werkstück entlanggeführt werden, ohne dass sich das Werkstück an den Muttern 10 verhaken kann. Im Ausführungsbeispiel sind zwei Muttern 10 zur Befestigung des Gehäusedeckels 11 am Gehäuse 2 vorgesehen. Es kann jedoch auch nur eine einzige Mutter 10 vorgesehen sein.

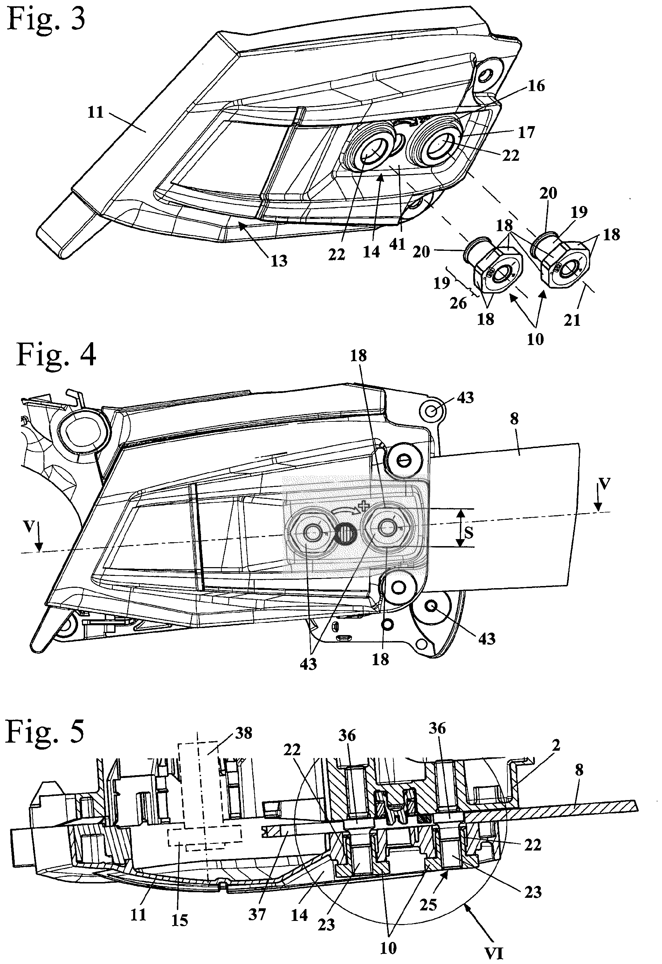

Wie Fig. 2 zeigt, besitzt der Gehäusedeckel 11 Befestigungsöffnungen 42 für einen Krallenanschlag. Das Gehäuse 2 kann weitere Befestigungsöffnungen 43 für einen weiteren Krallenanschlag aufweisen, wie Fig. 4 zeigt.

Wie Fig. 3 zeigt, umgeben die Dome 16 jeweils eine Öffnung 22. Die Vertiefung 14 des Gehäusedeckels 11 besitzt einen Boden 41, von dem sich die Dome 16 erheben. Die Muttern 10 besitzen jeweils einen ersten Abschnitt 26, der an der Gehäusedeckelaußenseite 13 angeordnet ist. Dieser erste Abschnitt 26 weist an seinem Außenumfang Schlüsselflächen 18 auf. Im Ausführungsbeispiel ist der Außenumfang des ersten Abschnitts 26 als Außensechskant ausgebildet. Auch eine beliebige andere regelmäßige oder unregelmäßige Kontur der Außenseite des ersten Abschnitts 26 kann jedoch vorteilhaft sein. Die Muttern 10 besitzen außerdem jeweils einen zweiten, hülsenförmigen Abschnitt 19, der in die Öffnung 22 ragt. An dem dem ersten Abschnitt 26 abgewandten Ende des hülsenförmigen, zweiten Abschnitts 19 ist jeweils ein radial nach außen ragender Halterand 20 an den hülsenförmigen Abschnitten 19 vorgesehen. Die Muttern 10 besitzen jeweils eine Längsmittelachse 21. An den Domen 16 ist eine der Unterseite der ersten Abschnitte 26 zugewandte Auflagefläche 17 ausgebildet. Im Ausführungsbeispiel sind die Auflageflächen 17 als Kreisringflächen ausgebildet.

Wie Fig. 4 zeigt, besitzen die Muttern 10 eine Schlüsselweite S, die dem Abstand zweier einander zugeordneter, gegenüberliegender Schlüsselflächen 18 entspricht. Besitzt die Mutter 10 eine andere Form, so ist die Schlüsselweite S der doppelte Radius eines Inkreises der Außenkontur an den Schlüsselflächen 18, wobei der Mittelpunkt des Inkreises auf der Längsmittelachse 21 der Mutter 10 liegt.

Wie Fig. 5 schematisch zeigt, ist das Kettenrad 15 von einer Antriebswelle 38 angetrieben. Die Antriebswelle 38 ist vorteilhaft über eine Fliehkraftkupplung mit einer Kurbelwelle des als Verbrennungsmotor gebildeten Antriebsmotors 12 verbunden. Wie Fig. 5 auch zeigt, sind ins Gehäuse 2 zwei Stehbolzen 23 eingeschraubt, die jeweils mit einem Bund 36 an der Außenseite des Gehäuses 2 anliegen. Der nach außen ragende Bereich der Stehbolzen 23 ragt durch die Öffnungen 22 des Gehäusedeckels 11. Die Muttern 10 sind jeweils auf die Stehbolzen 23 aufgeschraubt. Im Ausführungsbeispiel schließt das nach außen ragende, freie Ende 25 der Stehbolzen 23 etwa bündig mit der Außenseite der Muttern 10 ab. Wie Fig. 5 zeigt, liegen die Muttern 10 weitgehend innerhalb der Vertiefung 14. Die Führungsschiene 8 besitzt eine Öffnung 37, die als Langloch ausgebildet ist und durch die die Stehbolzen 23 ragen.

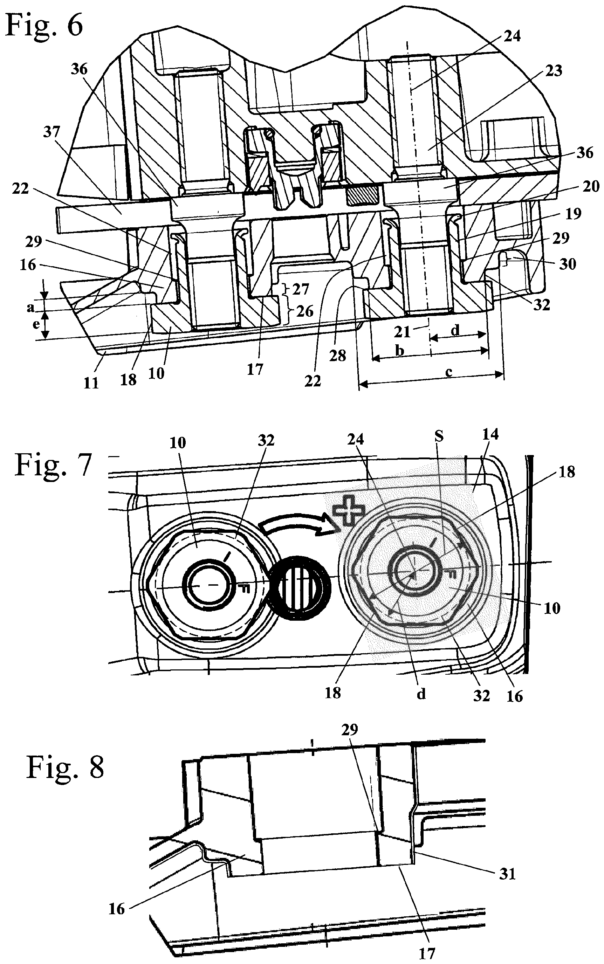

Die Stehbolzen 23 besitzen jeweils eine Längsmittelachse 24, die in montiertem Zustand des Gehäusedeckels 11 mit der Längsmittelachse 21 der Muttern 10 zusammenfällt. Fig. 6 zeigt die Gestaltung der Dome 16 im Einzelnen. Die Dome 16 besitzen jeweils einen ersten Bereich 27, der an die Auflageflächen 17 anschließt. In dem ersten Bereich 27 besitzen die Dome 16 einen Außendurchmesser b. Der Außendurchmesser b entspricht dabei höchstens der Schlüsselweite S der Mutter 10 (Fig. 7). Im Ausführungsbeispiel sind die ersten Bereiche 27 mit kreisringförmigem Querschnitt ausgebildet, wie auch Fig. 7 schematisch zeigt. Bei ungleichmäßiger Außenkontur ist ein maximaler Abstand d des Außenumfangs 32 des Doms 16 im ersten Bereich 27 höchstens so groß, also gleich groß oder kleiner, wie die halbe Schlüsselweite S. Die Muttern 10 besitzen an ihrem ersten, außenliegenden Abschnitt 26 eine Stirnseite 28, die an der Auflagefläche 17 der Dome 16 anliegt. Wie Fig. 6 auch zeigt, schließt an den ersten Bereich 27 ein zweiter Bereich 30 an der der Auflagefläche 17 abgewandten Seite an. Im zweiten Bereich 30 besitzen die Dome 16 einen Außendurchmesser c, der größer als die Schlüsselweite S ist. Dadurch wird eine erhöhte Stabilität erreicht.

Der erste Bereich 27 besitzt eine parallel zur Längsmittelachse 24 des Stehbolzens 23 gemessene Höhe a, die mindestens 2 mm beträgt. Vorteilhaft beträgt die Höhe a mindestens 3 mm, bevorzugt mindestens 4 mm. Die Höhe e der Schlüsselflächen 18 der Muttern 10 beträgt vorteilhaft weniger als 10 mm. Die Höhe e beträgt vorteilhaft weniger als 8 mm, bevorzugt etwa 4 mm bis etwa 6 mm.

Die Muttern 10 sind am Gehäusedeckel 11 unverlierbar gehalten. Hierzu ist der Halterand 20 vorgesehen. Die Öffnungen 22 im Gehäusedeckel 10 besitzen jeweils einen Rand 29, den der radial nach außen ragende Halterand 20 bei vollständig von den Stehbolzen 23 abgeschraubten Muttern 10 hintergreift. Dadurch können die Muttern 10 nicht vom Gehäusedeckel 11 abgenommen werden, sondern sind auch bei vom Gehäuse 2 abgenommenem Gehäusedeckel 11 unverlierbar am Gehäusedeckel 11 gehalten.

Wie Fig. 8 zeigt, weist der Gehäusedeckel 11 eine Außenschicht 31 auf. Die Außenschicht 31 ist vorteilhaft eine Lackierung oder Beschichtung. An der Auflagefläche 17 ist keine Außenschicht 31 vorgesehen. Die Auflagefläche 17 ist vorteilhaft spanend bearbeitet, insbesondere nach dem Aufbringen der Außenschicht 31. Dadurch ergibt sich an der Auflagefläche 17 eine definierte, ebene Fläche. Dadurch wird eine definierte, ausreichend große Kontaktfläche zwischen der Auflagefläche 17 und der Stirnseite 28 der Mutter 10 erreicht.

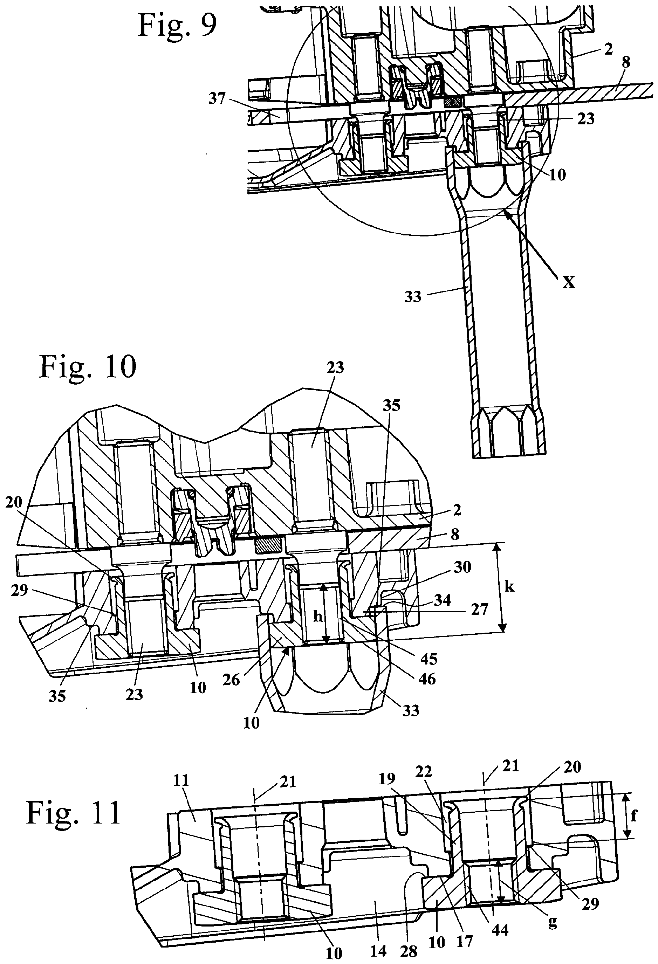

Die Figuren 9 und 10 zeigen ein an der Anordnung angeordnetes Werkzeug 33, im Ausführungsbeispiel ein Steckschlüssel. Wie Fig. 10 zeigt, ist im Ausführungsbeispiel zwischen den Bereichen 27 und 30 der Dome 16 ein Absatz 35 gebildet. Bis zum Absatz 35 kann das Werkzeug 33 über den freiliegenden Abschnitt 26 der Mutter 10 und über den Dom 16 geschoben werden. Dadurch ist auch bei geringer Höhe des freiliegenden Abschnitts 26 sichergestellt, dass das Werkzeug 33 beim Lösen oder Festdrehen der Mutter 10 nicht von den Schlüsselflächen 18 (Fig. 7) abrutschen kann. Das Werkzeug 33 kann dabei mit seiner Stirnseite 34 auf dem Absatz 35 aufliegen und sich dort abstützen. Die Muttern 10 besitzen eine dem Gehäuse 2 abgewandte Außenseite 46. Durch den ersten Bereich 27 des Doms 16 mit verringertem Durchmesser kann aufgrund der geringen benötigten Höhe der Muttern 10 ein geringer Abstand k der Außenseiten 46 der Muttern 10 zur Führungsschiene 8 erreicht werden. Die Stehbolzen 23 besitzen ein Außengewinde 45, das eine parallel zur Längsmittelachse 24 des Stehbolzens 24 gemessene Gewindelänge h besitzt.

Fig. 11 zeigt den Gehäusedeckel 11 mit daran angeordneten Muttern 10 in einer Stellung, in der die Stirnseiten 28 der Muttern 10 an den Auflageflächen 17 der Dome 16 anliegen. In dieser Stellung besitzt der Halterand 20 am hülsenförmigen Abschnitt 19 zum Rand 29 des Gehäusedeckels 1 leinen parallel zur Längsmittelachse 21 der Mutter 10 gemessenen Abstand f. Die Muttern 10 besitzen ein Innengewinde 44 mit einer Gewindelänge g. Die Gewindelänge g ist im Ausführungsbeispiel deutlich kleiner als eine Gewindelänge h der Stehbolzen 23. Die Gewindelänge h der Gewinde 45 der Stehbolzen 23, die Gewindelänge g der Innengewinde 44 der Muttern 10 und der Abstand f sind so aufeinander abgestimmt, dass die Muttern 10 vollständig von den Stehbolzen 23 abgeschraubt werden, wenn der Gehäusedeckel 11 an der Führungsschiene 8 und die Führungsschiene 8 am Gehäuse 2 anliegt. Dadurch ist es möglich, zuerst eine Mutter 10 vollständig zu lösen und anschließend die andere Mutter 10 zu lösen. Der Abstand f ist dabei mindestens so groß wie die Kontaktlänge der Gewindeverbindung zwischen den Gewinden 44 und 45 in angezogenem Zustand der Gewindeverbindung, also bei geklemmt gehaltener Führungsschiene 8. Im Ausführungsbeispiel entspricht die Kontaktlänge der Gewindeverbindung der Gewindelänge g des Innengewindes 44 der Mutter 10, da das Innengewinde 44 in angezogenem Zustand vollständig auf das Gewinde 45 des Stehbolzens 23 aufgeschraubt ist.

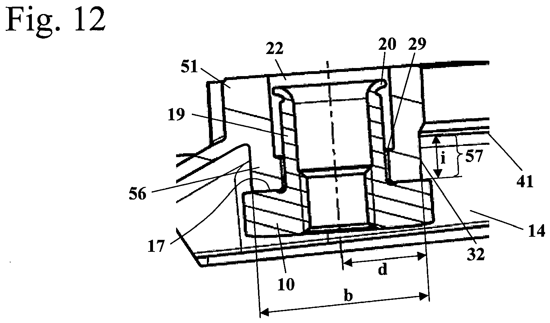

Fig. 12 zeigt ein Ausführungsbeispiel eines Gehäusedeckels 51 in einer ausschnittsweisen Schnittdarstellung. Der Gehäusedeckel 51 besitzt zwei Dome 56, von denen in Fig. 12 einer gezeigt ist. Die Gestaltung des Gehäusedeckels 51 entspricht im Wesentlichen der Gestaltung des Gehäusedeckels 2. Am Gehäusedeckel 51 ist eine Mutter 10 angeordnet. Die Mutter 10 ist entsprechend der Mutter 10 des vorangegangenen Ausführungsbeispiels ausgebildet, wobei gleiche Bezugszeichen in allen Figuren einander entsprechende Elemente bezeichnen. Der hülsenförmige Abschnitt 19 der Mutter 10 ragt in eine Öffnung 22 des Gehäusedeckels 51. An der Öffnung 22 ist ein Rand 29 ausgebildet, der von einem Halterand 20 des hülsenförmigen Abschnitts 19 hintergriffen wird. Der Dom 51 besitzt einen ersten Bereich 57, der an die Auflagefläche 17 des Doms 56 für die Mutter 10 angrenzt. Der erste Bereich 57 besitzt eine Höhe i, die größer sein kann als die Höhe a des ersten Bereichs 27 des vorangegangenen Ausführungsbeispiels. Die Höhe i ist größer als 2 mm. Der erste Bereich 57 erstreckt sich bis an den Boden 41 der Vertiefung 14. Dadurch kann das Werkzeug 33 am Gehäusedeckel 51 bis an den Boden 41 der Vertiefung 14 über eine Mutter 10 geschoben werden. Der Rand 29 der Öffnung 22 ist im ersten Bereich 57 ausgebildet. Der erste Bereich 57 dient damit sowohl als Bereich, über den das Werkzeug 33 geschoben werden kann, als auch zur unverlierbaren Fixierung der Mutter 10 am Halterand 20. Die axiale Länge des Bereichs 57 wird dadurch doppelt genutzt, so dass sich insgesamt eine geringe Baubreite des Gehäusedeckels 51 und ein geringer Abstand k (Fig. 10) zwischen Führungsschiene 8 und Außenseite 64 der Mutter 10 erreichen lässt.

Der erste Bereich 57 besitzt einen Außendurchmesser b, der kleiner als die Schlüsselweite S der Mutter 10 (Fig. 7) ist. Im Ausführungsbeispiel besitzt der erste Bereich 57 einen kreisringförmigen Querschnitt. Bei von der Kreisringform abweichender Querschnittsform ist ein maximaler Abstand d des Außenumfangs 32 des ersten Bereichs 57 kleiner als die halbe Schlüsselweite S der Mutter 10.

## Patentansprüche

1. Handgeführtes Arbeitsgerät mit einem Gehäuse (2), an dem ein Gehäusedeckel (11, 51) festgelegt ist, wobei zwischen dem Gehäuse (2) und dem Gehäusedeckel (11, 51) eine Werkzeugeinheit (39) gehalten ist, wobei an dem Gehäuse (2) mindestens ein Stehbolzen (23) festgelegt ist, der durch eine Öffnung (22) des Gehäusedeckels (11, 51) ragt und der eine Längsmittelachse (24) besitzt, wobei auf das freie Ende (25) des Stehbolzens (23) ein Befestigungselement aufgeschraubt ist, das den Gehäusedeckel (11, 51) am Gehäuse (2) sichert, wobei der Gehäusedeckel (11, 51) eine dem Gehäuse (2) abgewandte Gehäusedeckelaußenseite (13) besitzt und wobei das Befestigungselement mindestens zwei einander zugeordnete, an der Gehäusedeckelaußenseite (13) angeordnete Schlüsselflächen (18) aufweist, wobei der Gehäusedeckel (11, 51) einen an der Gehäusedeckelaußenseite (13) nach außen ragenden Dom (16, 56) besitzt, der eine Auflagefläche (17) für das Befestigungselement bildet und durch den sich die Öffnung (22) erstreckt, und wobei der an der Gehäusedeckelaußenseite (13) angeordnete Abschnitt des Befestigungselements in einer Draufsicht in Richtung der Längsmittelachse (24) des Stehbolzens (23) von einer Umfangskontur begrenzt ist, **dadurch gekennzeichnet, dass** die Umfangskontur die Schlüsselflächen (18) besitzt, und dass der maximale radiale Abstand (d) des Außenumfangs (32) des Doms (16, 56) zur Längsmittelachse (24) an der Auflagefläche (17) und in einem an die Auflagefläche (17) angrenzenden ersten Bereich (27, 57) höchstens so groß ist wie die halbe Schlüsselweite (S) der Schlüsselflächen (18) des Befestigungselements, so dass ein Werkzeug, das an den Schlüsselflächen (18) angreift, über den ersten Bereich des Doms (16, 56) geschoben werden kann.

2. Arbeitsgerät nach Anspruch 1,
**dadurch gekennzeichnet, dass** die Höhe (a, i) des an die Auflagefläche (17) angrenzenden Bereichs (27, 57) des Doms (16, 56) mindestens 2 mm beträgt.

3. Arbeitsgerät nach Anspruch 1 oder 2,
**dadurch gekennzeichnet, dass** die parallel zur Längsmittelachse (24) gemessene Höhe (e) der Schlüsselflächen (18) weniger als 10 mm beträgt.

4. Arbeitsgerät nach einem der Ansprüche 1 bis 3,
**dadurch gekennzeichnet, dass** der Gehäusedeckel (11,51) aus Metall ist und dass die Auflagefläche (17) spanend bearbeitet ist.

5. Arbeitsgerät nach Anspruch 4,
**dadurch gekennzeichnet, dass** der Gehäusedeckel (11, 51) eine Außenschicht (31) auf dem Metall aufweist und dass die Außenschicht (31) sich nicht auf die Auflagefläche (17) erstreckt.

6. Arbeitsgerät nach einem der Ansprüche 1 bis 5,
**dadurch gekennzeichnet, dass** die Schlüsselflächen (18) an eine Stirnseite (28) des Befestigungselements angrenzen, die an der Auflagefläche (17) anliegt.

7. Arbeitsgerät nach einem der Ansprüche 1 bis 6,
**dadurch gekennzeichnet, dass** das Befestigungselement in der Öffnung (22) des Gehäusedeckels (11, 51) unverlierbar gehalten ist.

8. Arbeitsgerät nach Anspruch 7,
**dadurch gekennzeichnet, dass** das Befestigungselement einen in die Öffnung (22) ragenden Halterand (20) besitzt, der einen Rand (29) der Öffnung (22) hintergreift.

9. Arbeitsgerät nach Anspruch 8,
**dadurch gekennzeichnet, dass** der Rand (29) der Öffnung (22) in dem Dom (16, 56) ausgebildet ist.

10. Arbeitsgerät nach Anspruch 9,
**dadurch gekennzeichnet, dass** der Rand (29) der Öffnung (22) in einem zweiten Bereich (30) des Doms (16) angeordnet ist, dessen Außendurchmesser (c) größer als die Schlüsselweite (S) der Schlüsselflächen (18) ist.

11. Arbeitsgerät nach einem der Ansprüche 8 bis 10,
**dadurch gekennzeichnet, dass** der Halterand (20) an einem in die Öffnung (22) ragenden hülsenförmigen Abschnitt (19) des Befestigungselements ausgebildet ist.

12. Arbeitsgerät nach Anspruch 11,
**dadurch gekennzeichnet, dass** der Abstand (f) zwischen dem Halterand (20) und dem Rand (29), die Gewindelänge (g) des Befestigungselements und die Gewindelänge (h) des Stehbolzens (23) so aufeinander abgestimmt sind, dass das Befestigungselement bei zwischen Gehäuse (2) und Gehäusedeckel (11, 51) geklemmt gehaltener Werkzeugeinheit (39) vollständig vom Gewinde (45) des Stehbolzens (23) abgeschraubt werden kann.

13. Arbeitsgerät nach einem der Ansprüche 1 bis 12,
**dadurch gekennzeichnet, dass** der Gehäusedeckel (11, 51) ein Kettenraddeckel ist und dass die Werkzeugeinheit (39) eine zwischen dem Kettenraddeckel und dem Gehäuse (2) geklemmt gehaltene Führungsschiene (8) umfasst.

## Claims

1. Hand-guided working implement with a housing (2), to which a housing cover (11, 51) is fixed, wherein a tool unit (39) is held between the housing (2) and the housing cover (11, 51), wherein at least one stud (23) extending through an opening (22) of the housing cover (11, 51) and having a longitudinal central axis (24) is fixed to the housing (2), wherein a fastening element securing the housing cover (11, 51) to the housing (2) is screwed onto the free end (25) of the stud (23), wherein the housing cover (11, 51) has a housing cover outside (13) averted from the housing (2), and wherein the fastening element has at least two flats (18), which are assigned to each other and located on the housing cover outside (13), wherein the housing cover (11, 51) has a dome (16, 56), which extends outwards at the housing cover outside (13), which forms a locating surface (17) for the fastening element and through which the opening (22) extends, and wherein that section of the fastening element which is located on the housing cover outside (13) is bounded by a circumferential contour in a top view in the direction of the longitudinal central axis (24),
**characterised in that** the circumferential contour has the flats (18), and **in that** the maximum radial distance (d) of the outer circumference (32) of the dome (16, 56) from the longitudinal central axis (24) is at the locating surface (17) and in a first region (27, 57) adjoining the locating surface (17) no more than half the width across flats (S) of the flats (18) of the fastening element, so that a tool acting on the flats (18) can be pushed over the first region of the dome (16, 56).

2. Working implement according to claim 1,
**characterised in that** the height (a, i) of that region (27, 57) of the dome (16, 56) which adjoins the locating surface (17) is at least 2 mm

3. Working implement according to claim 1 or 2,
**characterised in that** the height (e) of the flats (18) as measured parallel to the longitudinal central axis (24) is less than 10 mm.

4. Working implement according to any of claims 1 to 3,
**characterised in that** the housing cover (11, 51) is made of metal, and **in that** the locating surface (17) is machined.

5. Working implement according to claim 4,
**characterised in that** the housing cover (11, 51) has an outer layer (31) on the metal, and **in that** the outer layer (31) does not extend onto the locating surface (17).

6. Working implement according to any of claims 1 to 5,
**characterised in that** the flats (18) adjoin an end face (28) of the fastening element, which end face (28) abuts the locating surface (17).

7. Working implement according to any of claims 1 to 6,
**characterised in that** the fastening element is held captive in the opening (22) of the housing cover (11, 51).

8. Working implement according to claim 7,
**characterised in that** the fastening element has a holding edge (20), which extends into the opening (22) and engages an edge (29) of the opening (22) from behind.

9. Working implement according to claim 8,
**characterised in that** the edge (29) of the opening (22) is formed in the dome (16, 56).

10. Working implement according to claim 9,
**characterised in that** the edge (29) of the opening (22) is located in a second region (30) of the dome (16), the outer diameter (c) of which second region (30) is greater than the width across flats (S) of the flats (18).

11. Working implement according to any of claims 8 to 10,
**characterised in that** the holding edge (20) is formed at a sleeve-shaped section (19) of the fastening element which extends into the opening (20).

12. Working implement according to claim 11,
**characterised in that** the distance (f) between the holding edge (20) and the edge (29), the thread length (g) of the fastening element and the thread length (h) of the stud (23) are matched to one another in such a way that the fastening element can be completely unscrewed from the thread (45) of the stud (23) if the tool unit (39) is held clamped between the housing (2) and the housing cover (11, 51).

13. Working implement according to any of claims 1 to 12,
**characterised in that** the housing cover (11, 51) is a sprocket cover, and **in that** the tool unit (39) comprises a guide rail (8) held clamped between the sprocket cover and the housing (2).

## Revendications

1. Appareil de travail à main avec un boîtier (2) sur lequel est calé un couvercle de boîtier (11, 51), dans lequel une unité d'outil (39) est retenue entre le boîtier (2) et le couvercle de boîtier (11, 51), dans lequel au moins une vis sans tête (23) qui passe à travers une ouverture (22) du couvercle de boîtier (11, 51) et qui a un axe longitudinal médian (24) est fixée au le boîtier (2), dans lequel un élément de fixation qui bloque le couvercle de boîtier (11, 51) sur le boîtier (2) est vissé sur l'extrémité libre (25) de la vis sans tête (23), dans lequel le couvercle de boîtier (11, 51) a un côté extérieur de couvercle de boîtier (13) opposé au boîtier (2), et dans lequel l'élément de fixation présente au moins deux surfaces de clé (18) associées l'une à l'autre et disposées sur le côté extérieur de couvercle de boîtier (13), dans lequel le couvercle de boîtier (11, 51) a une calotte (16, 56) qui dépasse vers l'extérieur sur le côté extérieur de couvercle de boîtier (13), qui forme la surface d'appui (17) pour l'élément de fixation et à travers laquelle s'étend l'ouverture (22), et dans lequel la section de l'élément de fixation disposée sur le côté extérieur de couvercle de boîtier (13) est délimitée, vue de dessus dans la direction de l'axe longitudinal médian (24) de la vis sans tête (23), par un contour circonférentiel,
**caractérisé en ce que** le contour circonférentiel possède les surfaces de clé (18) et **en ce que** la distance radiale maximale (d) entre la circonférence extérieure (32) de la calotte (16, 56) et l'axe longitudinal médian (24) sur la surface d'appui (17) et dans une première zone (27, 57) adjacente à la surface d'appui (17) est au maximum aussi grande que la moitié de largeur de clé (S) des surfaces de clé (18) de l'élément de fixation, de sorte qu'un outil qui agit sur les surfaces de clé (18) peut être glissé sur la première zone de la calotte (16, 56).

2. Appareil de travail selon la revendication 1,
**caractérisé en ce que** la hauteur (a, i) de la zone (27, 57) de la calotte (16, 56) adjacente à la surface d'appui (17) est d'au moins 2 mm.

3. Appareil de travail selon la revendication 1 ou 2,
**caractérisé en ce que** la hauteur (e) des surfaces de clé (18) mesurée parallèlement à l'axe longitudinal médian (24) est de moins de 10 mm.

4. Appareil de travail selon l'une des revendications 1 à 3,
**caractérisé en ce que** le couvercle de boîtier (11, 51) est en métal et **en ce que** la surface d'appui (17) est usinée par enlèvement de copeaux.

5. Appareil de travail selon la revendication 4,
**caractérisé en ce que** le couvercle de boîtier (11, 51) présente une couche extérieure (31) sur le métal et **en ce que** la couche extérieure (31) ne s'étend pas sur la surface d'appui (17).

6. Appareil de travail selon l'une des revendications 1 à 5,
**caractérisé en ce que** les surfaces de clé (18) sont adjacentes à un côté frontal (28) de l'élément de fixation qui est appliqué contre la surface d'appui (17).

7. Appareil de travail selon l'une des revendications 1 à 6,
**caractérisé en ce que** l'élément de fixation est retenu, imperdable, dans l'ouverture (22) du couvercle de boîtier (11, 51).

8. Appareil de travail selon la revendication 7,
**caractérisé en ce que** l'élément de fixation a un bord de retenue (20) dépassant dans l'ouverture (22), qui vient en prise derrière un bord (29) de l'ouverture (22).

9. Appareil de travail selon la revendication 8,
**caractérisé en ce que** le bord (29) de l'ouverture (22) est formé dans la calotte (16, 56).

10. Appareil de travail selon la revendication 9,
**caractérisé en ce que** le bord (29) de l'ouverture (22) est disposé dans une deuxième zone (30) de la calotte (16) dont le diamètre extérieur (c) est plus grand que la largeur de clé (S) des surfaces de clé (18).

11. Appareil de travail selon l'une des revendications 8 à 10,
**caractérisé en ce que** le bord de retenue (20) est formé sur une section en forme de manchon (19) de l'élément de fixation dépassant dans l'ouverture (22).

12. Appareil de travail selon la revendication 11,
**caractérisé en ce que** la distance (f) entre le bord de retenue (20) et le bord (29), la longueur de filetage (g) de l'élément de fixation et la longueur de filetage (h) de la vis sans tête (23) sont adaptées les unes aux autres de sorte que l'élément de fixation, quand l'unité d'outil (39) est retenue par serrage entre le boîtier (2) et le couvercle de boîtier (11, 51), puisse être complètement dévissé du filetage (45) de la vis sans tête (23).

13. Appareil de travail selon l'une des revendications 1 à 12,
**caractérisé en ce que** le couvercle de boîtier (11, 51) est un couvercle de roue à chaîne et **en ce que** l'unité d'outil (39) comprend un rail de guidage (8) retenu par serrage entre le couvercle de roue à chaîne et le boîtier (2).
